# EUROPEAN PATENT SPECIFICATION

(11) **EP 0 350 460 B1**
(45) Date of publication and mention of the grant of the patent: **26.05.1993**
(21) Application number: 89830289.8
(22) Date of filing: 22.06.1989
(51) Int. Cl.: B01D 9/02

(54) **Metallic activator for starting crystallization of saline solutions in heating devices**
Metallisches Aktivierungsmittel für das Starten der Kristallisierung von salzhaltigen Lösungen in Heizungsanlagen
Activeur métallique pour démarrer la cristallisation de solutions salines dans les systèmes de chauffage

(30) Priority: 23.06.1988 IT 2108188
(43) Date of publication of application: 10.01.1990
(73) Proprietor: PLURIMA S.r.l., 20162 Milano (IT)
(72) Inventor: Bonomi, Celso, I-46049 Volta Mantovana (MN) (IT)
(74) Representative: Beneduce, Gianna

(56) References cited:
- EP-A- 0 045 971
- US-A- 4 379 448
- US-A- 4 532 110
- US-A- 4 572 158

## Description

The object of the present invention is a metallic activator which starts the crystallization of supercooled solutions inside sealed containers made of flexible, transparent plastic material, said containers being small thermic cushions capable of releasing heat at a temperature of 45-65°C.

A solution of a solid in a liquid is called saturated, at a given temperature, when at that temperature it is in equilibrium with the undissolved solid: at that temperature the solution contains the maximum amount of solid. It is, nevertheless, known that dissolving a solid in a liquid, taking particular precautions, it is possible to dissolve a larger quantity of solid than that corresponding to its solubility: the result is a supersaturated solution that represents a physical system which is not in equilibrium. From a supersaturated solution, the excess of dissolved solid is separated by stirring, vibrating or adding a solid crystal: the crystallization of the solution thereby takes place and the solid precipitates. It is also known that, during crystallization, the solution releases a certain amount of heat that is called latent heat of crystallization.

In another, but equivalent way, a supersaturated solution can be called supercooled. Such definition derives from the fact that a supersaturated solution, at a given temperature and containing a fixed amount of solid, is at a lower temperature than that corresponding to a solution with the same but completely dissolved amount of solid, the solubility being so much higher as is the temperature of the solution. The two terms 'supersaturated solution' and 'supercooled solution' are, therefore, equivalent.

Based on the possibility of obtaining supercooled solutions and of being able to obtain some heat from them when necessary by crystallization special heating devices are embodied which can release heat at a temperature of from 45 to 65°C, particularly useful for peculiar circumstances such as sporting events and, more generally, in medicine, for heating restricted body areas (wounded parts or muscolar cramps) for warming up baby foods (in a bottle or on a dish) or for medical analyses in mobile laboratories.

The advantage of these heating methods lies on the fact that the solution containers are easily transported and can have various shapes. If they are made with flexible material such as PVC or polyethylene, they can easily adhere to the part of body surface where the heat is needed, at a temperature no higher than that of the human body.

In comparison with the hot water container, these devices, or small thermic cushions, have the advantage of releasing a higher heat quantity (of equal weight or volume) equivalent to the crystallization heat which is much higher than the sensible heat of water released at decreasing temperatures. As examples of suitable solutions for the embodiment of small thermic cushions, sodium acetate and calcium nitrate tetrahydrate aqueous solutions are particularly used.

The water/salt ratio is important both for use of the small cushion and for adjusting the quantity of the released heat.

It is evident that, when the solution is supersaturated, the higher the salt concentration is, the higher is the possibility that crystallization can start by itself, e.g. due to a knock or shake, even during transportation. For this purpose it was found that impurities contained in the solution lowered the crystallization point with consequent stabilization of the solution.

On the other hand, the lower the dissolved salt concentration is, the more difficult is the self-start crystallization, but even more difficult is the start of the crystallization when it is needed.

With regard to the release of heat, it is evident that the more supersaturated the solution is, the higher is the heat released. In this way, by regulating the concentration, it is therefore possible to control the amount of heat released.

The fundamental part of these heating devices or small thermic cushions is the activator, which must start the crystallization when heat release is required. It must be simple, absolutely reliable and be easily manufactured.

In the past crystallization was started either by introducing a solute crystal or some air in the small thermic cushion. Neither methods are very practical and especially so because they require openable container, with the possibility, therefore of difficult closure and partial loss of the solution. Following that, mechanical activators placed inside the containers, but operated from outside, were tested.

It is, in fact, possible to start crystallization simply by rubbing a movable piece, generally a flexible metallic strip, against the container wall or vibrating some fissured-strips, in this case the deepest part of the fissure being the crystallization starting point.

In US Patent 4,572,158 is described a trigger formed by a metallic disk wherein a plurality of various shaped cuts are located which show at their two ends other angularly elongated cuts.

In a preferred embodiment this trigger shows elongated parallel cuts.

Even in the case of the possibility of making sealed containers, these types of activators have a disadvantage due to the fact that the movable rubbing or vibrating strips, generally made of metallic material, frequentely break after a certain time and, in the case of a container made of flexible plastic material, they can cause breakage.

The metallic activator, object of the present invention, is a small, thin, simple and flexible disk, easily made, which is introduced in the solution container before it is definitely sealed and which is externally activated by the fingers of whoever wishes to start crystallization and, consequently, release of heat.

The operating action only consists of holding the small disk which is situated in a certain part of the container, always from the outside, said container generally made of flexible, transparent, plastic material, and to impress it slightly in a reversible manner in such a way that, the disk being shaped like a portion of a wide-radius spherical surface and having two possible stable shapes, a concave and a convex one, its shape is altered from the stable concave to the likewise stable convex one, by a light pressure applied by the operator's fingers.

The functioning of the activator, i.e. the crystallization, is due to the presence of very small fissures, having particular shapes and sizes, which are radially set out on its surface.

The metallic activator of the present invention is introduced inside the container, made of flexible, transparent plastic material, together with the chosen solution; the plastic container is then sealed and from this moment the small thermic cushion is ready for use. Once used, i.e. when the solution is crystallized, it can be used again by re-heating it in order to re-dissolve the solid substance therein, then allowed to cool down to room temperature, once again ready for use with the supercooled solution.

When using it a second time, crystallization is started as described above, but the process re-shapes the small disk in such a way as to bring it back to its original stable shape. And the same applies for all subsequent uses.

The small thermic cushion, thanks to the activator's simplicity, is always closed and sealed, thereby avoiding all the above-mentioned disadvantages.

For a better understanding of the metallic activator of the present invention, reference is made to the attached drawings which are not to be considered as limiting the invention.

Figure 1 shows the front view of the metallic activator.

Figure 2 shows a section of the metallic activator along line A-A of Figure 1, in one of the two stable shapes.

Figure 3 shows a section of the activator along the same line A-A of Figure 1, in the other stable shape, after the activator has been put in operation.

Figure 4 shows the details of the fissures which concern the whole thickness of disk 1.

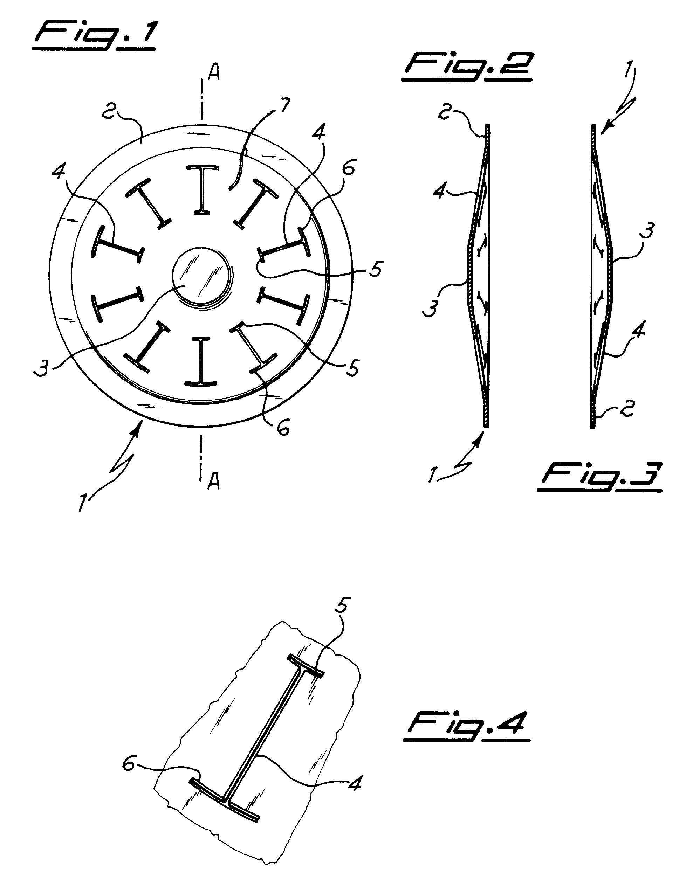

The above figures show the activator represented as a circular-shaped disk 1 having a crown-shaped outer ring which always remains in the same plane in whichever shape, the stable concave or convex shape, the activator is held. The two stable shapes are shown in section in Figures 2 and 3, respectively convex and concave with respect to the plane that contains the outer ring 2.

Disk 1 has a central part 3 without fissures, which changes position in the two stable shapes, but which does not undergo any deformation. Disk 1 has furthermore a third portion 7, also shaped as a ring, which is positioned between the outer ring 2 and the round inner portion 3 and which carries the fissures. When it is desired to start crystallization, the operator holds disk 1 which is situated in a certain area inside the small thermic cushion and, levering on ring 2, pushes the central part 3 from the shape shown in Figure 2 to the shape shown in Figure 3, both shapes being equally stable. The radial fissures 4 have at their inner and outer ends other fissures 5 and 6 namely, fissures 5 being shorter than fissures 6, both shorter than radial fissures 4.

Fissures 5 and 6 are placed on two concentric circumferences having their centre coincident with the centre of disk 1 and as radius the distance from the disk 1 centre respectively of the most internal and the most external end of radial fissures 4.

Fissures 6 are longer than fissures 5: said lengths are in fact proportional to above-mentioned radius because two corresponding fissures 5 and 6, obviously at the two ends of the same radial fissure 4, lie along the two above-mentioned circumferences and represent the two arcs of said circumferences which subtend the same central angle.

Both radial fissures 4 and circumferencial fissures 5 and 6 are extremely narrow and they all are points of start of crystallization.

Fissures 4 can vary from 8 to 12, preferably 10, and be placed radially: they help in making more flexible the portion of the disk which is between the annular outer ring 2 and the solid inner one 3.

However, since fissures 4 are not parallel, they do not practically weaken said part of the disk which, because it undergoes a deformation every time the small thermic cushion is used, could break as a result of fatigue problems.

Furthermore the presence of fissures 5 and 6, almost perpendicular to fissures 4, creates a discontinuity that hinders an eventual disk breakage along a diameter which contains two opposite fissures 4. No fissure is sharp-edged which could cause an easier disk breakage. The use of disk 1 and, therefore, of the small thermic cushion in which it is contained practically results indefinite.

Disk 1 is preferably made of stainless steel and is manufactured by shearing from a band of adequate thickness, from 0.10 to 0.20 mm, preferably of 0.15 mm.

Its minimal dimensions and the disk shape are such as absolutely not to cause damage to the container made of flexible plastic material in which, placed in a certain area, it it is contained together with the solution. Said plastic, flexible and transparent container is made from PVC or polyethylene or polyurethane.

## Claims

1. Metallic activator (1) for starting crystallization of a supercooled solution inside sealed container of flexible and transparent plastic material, forming together with said container a small thermic cushion able to release heat at a temperature of 45-65°C, said activator (1) being made of a very thin metallic disk, characterized by the fact that it is formed by a outer ring (2), a round-shaped central portion (3) and a third portion (7) also shaped as a ring which is positioned between the outer ring (2) and the round inner portion (3), said ring-shaped third portion (7) being provided with a number of radial fissures (4) each having at its ends two circumferential fissures (5,6) which are set out on two concentrical circumferences leaving as their centre the disk centre and having as radius the distance between the disk centre and the inner end of the radial fissure (4) and the distance between the disk centre and the outer end of the radial fissure (4) respectively, the ratio of said radii giving the ratio of the respective lengths of the circumferential fissures.

2. A metallic activator according to claim 1, characterized by the fact that the radial fissures (4) are in a number from 8 to 12.

3. A metallic activator according to claim 2, characterized by the fact that there are 10 radial fissures (4).

## Patentansprüche

1. Metallisches Aktivierungsmittel (1) zum Starten einer Kristallisation einer überkühlten Lösung innerhalb eines abgedichteten Behälters aus einem flexiblen und transparenten Kunststoffmaterial, welches zusammen mit dem Behälter ein kleines Wärmekissen bildet, das Wärme bei einer Temperatur von 45 bis 65°C abgeben kann, wobei das Aktivierungsmittel (1) aus einer sehr dünnen Metallscheibe besteht, gekennzeichnet durch die Tatsache, daß es durch einen äußeren Ring (2), einen runden zentralen Abschnitt (3), und einen dritten Abschnitt (7) gebildet wird, der ebenfalls ail ein Ring geformt ist, der zwischen dem äußeren Ring (2) und dem runden inneren Abschnitt (3) angeordnet ist, wobei der ringförmige dritte Abschnitt (7) mit mehreren radialen Rissen (4) versehen ist, von denen jeder an seinen Enden zwei Umfangsrisse (5,6) aufweist, die auf zwei konzentrischen Umfängen liegen, deren Zentrum das Scheibenzentrum ist und deren Radius die Entfernung zwischen dem Scheibenzentrum und dem inneren Ende des radialen Risses (4) bzw. die Entfernung zwischen dem Scheibenzentrum und dem äußeren Ende des radialen Risses (4) ist, wobei das Verhältnis der Radien das Verhältnis der jeweiligen Längen der Umfangsrisse angibt.

2. Metallisches Aktivierungsmittel nach Anspruch 1, gekennzeichnet durch die Tatsache, daß die Anzahl der radialen Risse (4) zwischen acht und zwölf liegt.

3. Metallisches Aktivierungsmittel nach Anspruch 2, gekennzeichnet durch die Tatsache, daß zehn radiale Risse (4) vorgesehen sind.

## Revendications

1. Organe métallique d'activation (1) destiné à déclencher la cristallisation d'une solution surfondue placée dans un récipient scellé d'une matière plastique souple et transparente, et formant avec le récipient un petit coussin thermique qui peut dégager de la chaleur à une température comprise entre 45 et 65°C, l'organe d'activation (1) étant formé d'un très mince disque métallique, caractérisé par le fait qu'il est formé avec une bague externe (2), une partie centrale (3) de forme circulaire, et une troisième partie (7) ayant aussi une forme de bague et qui est placée entre la bague externe (2) et la partie interne circulaire (3), la troisième partie (7) en forme de bague ayant un certain nombre de fissures radiales (4) qui ont chacune, à ses extrémités, deux fissures circonférentielles (5, 6) qui sont placées sur deux circonférences concentriques centrées sur le centre du disque ayant un rayon égal à la distance comprise entre le centre du disque et l'extrémité interne de la fissure radiale (4) et la distance comprise entre le centre du disque et l'extrémité externe de la fissure radiale (4) respectivement, le rapport des rayons donnant le rapport des longueurs respectives des fissures circonférentielles.

2. Organe métallique d'activation selon la revendication 1, caractérisé par le fait que les fissures radiales (4) sont en nombre compris entre 8 et 12.

3. Organe métallique d'activation selon la revendication 2, caractérisé par le fait qu'il comporte dix fissures radiales (4).
